# EUROPEAN PATENT APPLICATION

(11) **EP 2 837 903 A2**
(43) Date of publication of application: **18.02.2015**
(21) Application number: 14177171.7
(22) Date of filing: 15.07.2014
(51) Int. Cl.: F25D 29/00, F25D 11/02

(54) **Method for controlling refrigerator**

(30) Priority: 13.08.2013 KR 20130095768
(71) Applicant: Dongbu Daewoo Electronics Corporation, Seoul 100-769 (KR)
(72) Inventor: Kwon, Won Joo, 100-769 Seoul (KR)
(74) Representative: Rau, Schneck & Hübner Patentanwälte Rechtsanwälte PartGmbB

(57) **Abstract**

A method for controlling an operation of a refrigerator includes circulating and/or supplying a refrigerant to a refrigeration chamber evaporator and a freezer chamber evaporator; determining whether to stop an operation of the compressor a predetermined time from or after an initial driving point in circulating and/or supplying the refrigerant; opening a refrigeration chamber switching valve, a freezer chamber switching valve and/or a refrigerant flow path valve, and subsequently closing the valve(s) when it is determined that the compressor should be stopped; and stopping the compressor after opening the refrigeration chamber switching valve, the freezer chamber switching valve and/or the refrigerant flow path valve.

## Description

### Cross-Reference to Related Applications

This application is based on and claims priority to Korean Patent Application No. 10-2013-0095768, filed on August 13, 2013, the disclosure of which is incorporated herein in its entirety by reference.

### Field of the Invention

The present invention relates to a method for controlling a refrigerator, and more particularly, to a method for controlling an operation of a refrigerator capable of increasing a cooling efficiency or refrigerant circulation efficiency of a refrigerator.

### Background of the Invention

In general, refrigerators keep food items fresh in a refrigeration chamber and a freezer chamber at low temperatures by repeating a refrigeration cycle, including compressing, condensing, expanding, and evaporating a refrigerant.

Specifically, a refrigerant in a refrigerator, while circulating through a compressor, a condenser, and an evaporator in a predetermined cycle, changes in state to absorb heat (e.g., from the refrigeration chamber and/or the freezer chamber) and release heat (e.g., to the external environment) to maintain the refrigeration chamber and the freezer chamber at a low temperature.

Recently, refrigerators include a freezer chamber evaporator and a separate refrigeration chamber evaporator in order to independently cool the freezer chamber and the refrigeration chamber, respectively.

In addition, a flow path adjusting valve that determines a flow path for the supplied refrigerant is installed between the condenser and the evaporator.

However, in a conventional method for controlling an operation of a refrigerator, the compressor is repeatedly driven and stopped according to a preset temperature within a freezer chamber or a refrigeration chamber. Here, when the driving of the compressor is stopped, circulation of the refrigerant that remains in the freezer chamber evaporator and the refrigeration chamber evaporator is also stopped. Thus, when the compressor is re-actuated, since the refrigerant that remains in the freezer chamber evaporator and the refrigeration chamber evaporator increases the internal pressure, the driving force to re-actuate the compressor drastically increases, overburdening the compressor and/or increasing power consumption.

### Summary of the Invention

In view of the above, therefore, the present invention provides a method for controlling an operation of a refrigerator capable of reducing or preventing generation of a driving force load of, on or in a compressor in advance when the compressor is re-actuated or restarted after being stopped, thus increasing cooling or refrigerant circulation efficiency and/or reducing or preventing a waste of power.

In accordance with one aspect of the invention, there is provided a method for controlling an operation of a refrigerator comprising a compressor, a condenser, and a refrigerant flow path valve that supplies refrigerant from the condenser to a refrigeration chamber evaporator and a freezer chamber evaporator, the method comprising circulating and/or supplying the refrigerant to the refrigeration chamber evaporator and the freezer chamber evaporator; determining whether to stop an operation of the compressor a predetermined time from or after an initial driving point in circulating and/or supplying the refrigerant; opening the refrigerant flow path valve and subsequently closing the refrigerant flow path valve when it is determined that the compressor should be stopped; and stopping the compressor after opening the refrigerant flow path valve.

In some embodiments of the method, the refrigerant flow path valve comprises a refrigeration chamber switching valve and a freezer chamber switching valve, and opening the refrigerant flow path valve comprises opening the refrigeration chamber switching valve and the freezer chamber switching valve, and closing the refrigerant flow path valve comprises closing the refrigeration chamber switching valve and the freezer chamber switching valve.

The method may further comprise operating a fan between the refrigeration chamber evaporator and the freezer chamber evaporator (or adjacent to one of the refrigeration chamber evaporator and the freezer chamber evaporator) after stopping the compressor. When the fan is adjacent to one of the refrigeration chamber evaporator and the freezer chamber evaporator, the method may further comprise operating a second fan adjacent to the other of the refrigeration chamber evaporator and the freezer chamber evaporator after stopping the compressor. The fan may be operated for 1-10 minutes after stopping the compressor.

The method may further comprise drawing or removing refrigerant remaining in the refrigeration chamber evaporator and the freezer chamber evaporator into the compressor when the refrigerant flow path valve (or the refrigeration chamber switching valve and the freezer chamber switching valve) is/are open.

In further embodiments, the method may further comprise operating or actuating the compressor for 70 to 120 seconds from a point of time at which the refrigerant flow path valve (or the refrigeration chamber switching valve and the freezer chamber switching valve) is/are opened.

The method may further comprise filtering impurities in the refrigerant using a dryer between the condenser and the refrigerant flow path valve.

In accordance with one aspect of the invention, there is provided a method for controlling an operation of a refrigerator comprising a compressor, a condenser, and a refrigerant flow path valve that supplies refrigerant from the condenser to a refrigeration chamber evaporator and a freezer chamber evaporator, the method comprising circulating and/or supplying the refrigerant to the refrigeration chamber evaporator and the freezer chamber evaporator; reaching one or more predetermined conditions for stopping operation of the compressor; opening the refrigerant flow path valve and subsequently closing the refrigerant flow path valve after the one or more predetermined conditions for stopping the compressor are reached; stopping the compressor a predetermined time after the one or more predetermined conditions for stopping the compressor are reached and after the refrigerant flow path valve is opened and closed; and re-actuating or restarting the compressor a predetermined period of time after stopping the compressor.

A further aspect of the invention relates to a tangible computer-readable medium containing a set of instructions embodied therein for controlling a refrigerator, the set of instructions being configured or adapted to perform one or more of the methods described herein.

An even further aspect of the invention relates to a refrigerator, comprising a compressor that compresses a refrigerant; a condenser receiving compressed refrigerant from the compressor; a refrigeration chamber evaporator and a freezer chamber evaporator, each in fluid communication with the condenser; a refrigerant flow path valve that supplies refrigerant from the condenser to the refrigeration chamber evaporator and the freezer chamber evaporator; and a controller configured to control a flow or circulation of the refrigerant through the compressor and the refrigerant flow path valve, the controller including the present computer-readable medium.

The refrigerator may further comprise a dryer between the condenser and the refrigerant flow path valve that filters impurities in the refrigerant.

The refrigerant flow path valve may comprise a refrigeration chamber switching valve and a freezer chamber switching valve, and the computer-readable medium may causes both of the refrigeration chamber switching valve and the freezer chamber switching valve to open, then close.

### Brief Description of the Drawings

The above and other objects and features of the present invention will become apparent from the following description of various embodiments, given in conjunction with the accompanying drawings, in which:
FIG. 1 is a schematic view illustrating an exemplary configuration of a refrigerating cycle to which a method for controlling an operation of a refrigerator in accordance with one or more embodiments of the present invention can be applied; and
FIG. 2 is a flow chart illustrating an exemplary method for controlling an operation of a refrigerator in accordance with one or more embodiments of the present invention.

### Detailed Description

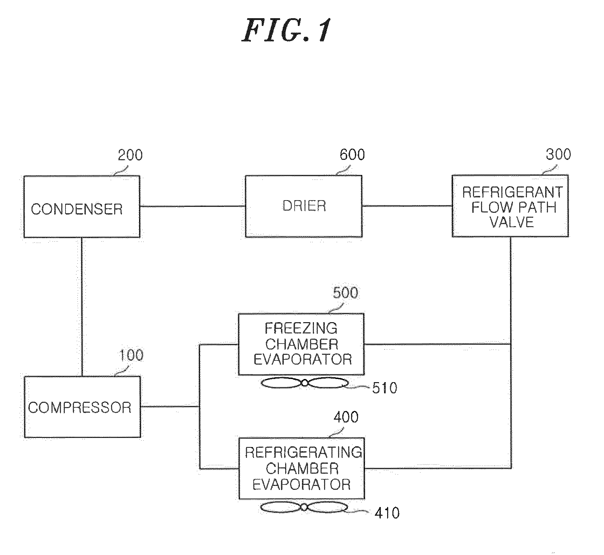

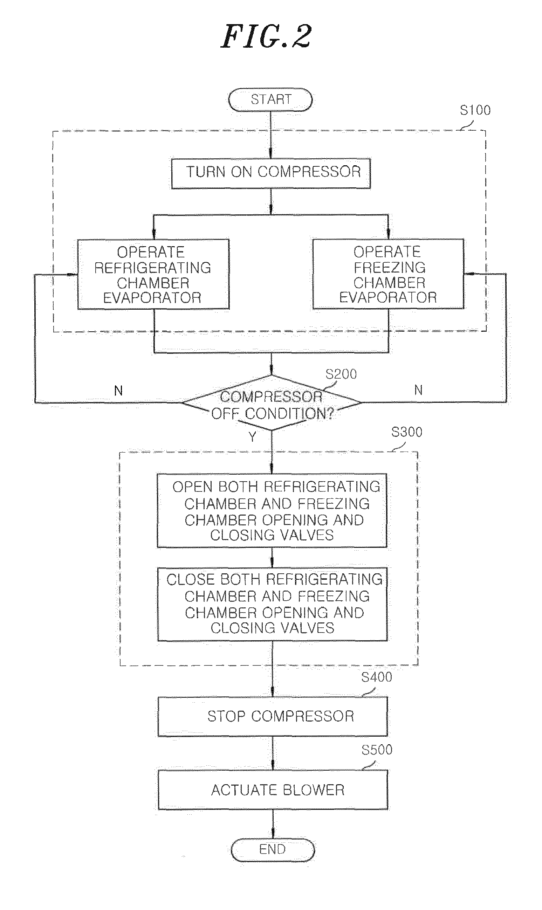

Hereinafter, embodiments of the present invention will be described in detail with reference to the accompanying FIGS. 1 and 2.

As illustrated in FIG. 1, a configuration for explaining an exemplary method for controlling an operation of a refrigerator in accordance with one or more embodiments of the present invention includes a compressor 100, a condenser 200 configured to condense refrigerant from the compressor 100, and a refrigerant flow path valve 300 configured to supply the refrigerant from the condenser 200 to both a refrigeration chamber evaporator 400 and a freezer chamber evaporator 500.

In addition, the configuration may further include a dryer 600 between the condenser 200 and the refrigerant flow path valve 300 configured to filter out impurities in the circulating refrigerant.

Specifically, the refrigerant is circulated on a predetermined cycle, during which impurities such as moisture, dust, metal, or a lubricant may mix with the refrigerant and circulate in the cycle, and in a section of the cycle in which the temperature decreases sharply, the impurities may freeze in the refrigerant pipe and interfere with a flow of the refrigerant, degrading the cooling efficiency of the refrigerator. In order to reduce or prevent the degradation of the cooling efficiency, the dryer 600 filters out impurities in the refrigerant in a section of the cycle in which the condenser and a capillary tube are connected in the refrigerator.

In addition, a refrigeration chamber switching valve (not shown) and a freezer chamber switching valve (not shown) may be installed in the refrigerant flow path valve 300 in order to open and close refrigerant pipes to the refrigeration chamber evaporator 400 and the freezer chamber evaporator 500, respectively. In such a case, separate pipes or conduits may transport or circulate the refrigerant to the refrigeration chamber evaporator 400 and the freezer chamber evaporator 500. Alternatively, if only a single pipe or conduit carries refrigerant from the refrigerant flow path valve 300, the refrigeration chamber switching valve and freezer chamber switching valve may be in the pipe or conduit from the refrigerant flow path valve 300 in series and in any order. In such a case, the switching valves may comprise variable 3-way valves, and the second valve in the series may have an output to a bypass tube, pipe or conduit (not shown) that transports excess refrigerant to the compressor 100. Alternatively, if the case of a single pipe or conduit carrying refrigerant from the refrigerant flow path valve 300, the refrigeration chamber switching valve and freezer chamber switching valve can be replaced with a single variable 3-way valve (i.e., at the T-intersection in the path from the refrigerant flow path valve 300 to the freezer chamber evaporator 500) that can control and vary the amount or proportion of refrigerant circulating or flowing to the refrigeration chamber evaporator 400 and the freezer chamber evaporator 500.

Also, blower fans 410 and 510 are installed in or adjacent to the refrigeration chamber evaporator 400 and the freezer chamber evaporator 500, respectively, in order to blow or circulate cooling air in the refrigeration chamber and the freezer chamber, respectively.

Hereinafter, the method for controlling an operation of a refrigerator in accordance with one or more embodiments of the present invention will be described with reference to FIG. 2.

As illustrated, the method for controlling an operation of a refrigerator in accordance with one or more embodiments of the present invention includes a compressor driving step S100, in which a refrigerant is circulated and/or supplied to the refrigeration chamber evaporator 400 and the freezer chamber evaporator 500, a compressor actuation condition determining step S200 in which it is determined whether to stop the operation of the compressor 100 after a predetermined amount of time passes or lapses from an initial driving point in the compressor driving step S100, a refrigerant flow path valve opening and closing step S300 in which a refrigeration chamber switching valve, a freezer chamber switching valve, and/or the refrigerant flow path valve 300 are opened and then subsequently closed when it is determined to stop the compressor in the compressor actuation condition determining step S200, and a compressor stopping step S400 in which the operation of the compressor 100 is stopped after the refrigerant flow path valve opening and closing step S300.

First, in the compressor driving step S100, when an operation signal of the refrigerator is input on power-up (e.g., when the refrigerator powers on), a refrigerant compressed according to a compression operation in the compressor 100 passes through the condenser 200 and is supplied to the refrigerant flow path valve 300. The refrigerant flow path valve 300 (e.g., a single refrigerant flow path valve controlling the flow between two pipes or conduits, or two separate switching valves) supplies the refrigerant supplied from the compressor 100 to the refrigeration chamber evaporator 400 and the freezer chamber evaporator 500, depending on the load or cooling demand, or one or more fluctuations thereof. This sequential process is repeatedly performed (e.g., continuously, according to the cycle in FIG. 1).

The compressor driving step S100 is a known method, and is generally performed according to the refrigerating cycle configuration. Therefore, a detailed description thereof will be omitted.

In the compressor actuation condition determining step S200, after the refrigeration chamber and the freezer chamber reach preset temperatures, respectively, in the compressor driving step S100, it is determined whether compressor stopping conditions are met. For example, the compressor stopping conditions may include whether one or both of the preset (e.g., target) temperatures for the refrigeration chamber and the freezer chamber have been reached, and if so whether the preset temperature(s) have been maintained for a predetermined length of time. When temperatures of the refrigeration chamber and the freezer chamber do not meet the preset temperatures, the compressor driving step S100 is repeatedly or continuously performed. Even when the preset temperatures are met, the driving or operation of the compressor 100 may not be stopped, and may continue for a predetermined period of time.

That is, in accordance with embodiments of the present invention, in the compressor actuation condition determining step S200, although temperatures within the refrigeration chamber and the freezer chamber reach the preset temperatures, the compressor 100 may continue to operate. This is to allow the compressor 100 to draw, attract or receive at least some refrigerant that remains within the refrigeration chamber evaporator 400 and/or the freezer chamber evaporator 500 during the refrigerant flow path valve opening and closing step S300.

Of course, the compressor 100 also supplies and/or circulates the refrigerant (e.g., to the condenser 200), as well as performing the drawing and/or receiving operation, but since the refrigerant supply / circulation is blocked by the refrigerant flow path valve 300, refrigerant is not supplied to the refrigeration chamber evaporator 400 and the freezer chamber evaporator 500 when the refrigerant flow path valve 300 is closed.

As a result, by extending a driving time of the compressor 100, some or all of the refrigerant that remains within the refrigeration chamber evaporator 400 and the freezer chamber evaporator 500 may be drawn out of the refrigeration chamber evaporator 400 and the freezer chamber evaporator 500 and toward or into the compressor 100, making the interiors of the refrigeration chamber evaporator 400 and the freezer chamber evaporator 500 relatively or substantially refrigerant-free when the compressor 100 is re-actuated after being stopped. Thus, internal pressure for circulating the refrigerant is lowered, reducing power consumption for driving the compressor 100, and further increasing cooling and/or refrigerant circulation efficiency at the same time.

Here, driving the compressor 100 for a predetermined period of time refers to driving the compressor 100 to accomplish the results described herein for the refrigerant flow path valve opening and closing step S300 (e.g., for approximately 70 to 120 seconds from the point in time at which the refrigerant flow path valve 300 is actuated, to be described later). For example, if the predetermined driving time of the compressor 100 is less than 70 seconds, the compressor 100 may not draw all or substantially all of the refrigerant from the refrigeration chamber evaporator 400 and the freezer chamber evaporator 500. Also, if the predetermined driving time of the compressor 100 exceeds 120 seconds, the savings in power consumption may not be realized or may not be sufficient to justify continuing to operate the compressor 100, and/or power consumption may increase drastically. Thus, the compressor 100 is preferably actuated for 70 to 120 seconds.

Meanwhile, in the refrigerant flow path valve opening and closing step S300, when it is determined that the compressor 100 should be stopped in the compressor actuation condition determining step S200 (e.g., one or more predetermined conditions are met for stopping operation of the compressor 100 or turning the compressor 100 off), one or more of the refrigeration chamber switching valve, the freezer chamber switching valve, and the refrigerant flow path valve 300 are opened and subsequently closed again.

In some embodiments. the refrigerant flow path valve 300 comprises both the refrigeration chamber switching valve and the freezer chamber switching valve, and each of these switching valves is opened for a predetermined period of time to allow refrigerant to be distributed and/or supplied to the refrigeration chamber evaporator 400 and the freezer chamber evaporator 500 without retaining refrigerant in the section (e.g., pipe[s] and/or conduit[s]) between each of the refrigeration chamber evaporator 400 and the freezer chamber evaporator 500 and the refrigerant flow path valve 300 before the compressor 100 is stopped, and thereafter, the refrigerant flow path valve 300 closes both of the switching valves. On the other hand, when a single valve (e.g., the refrigerant flow path valve 300) controls the flow of refrigerant to the refrigeration chamber evaporator 400 and the freezer chamber evaporator 500, the single valve may be opened for the predetermined period of time, then closed, to achieve the effect(s) of the invention

Accordingly, when the refrigerant flow path valve 300 (or the refrigeration chamber switching valve and the freezer chamber switching valve) are opened, the refrigerant in the refrigerant flow path valve 300 and between the refrigerant flow path valve 300 and the refrigeration chamber evaporator 400 and the freezer chamber evaporator 500 simultaneously enter the refrigeration chamber evaporator 400 and the freezer chamber evaporator 500, allowing the refrigerant to be quickly drawn therein. Also, since cooling air may be additionally supplied to the refrigeration chamber and the freezer chamber when the refrigerant is being drawn toward the compressor 100, re-actuating or restarting the compressor 100 after the compressor 100 has been stopped may be deferred as late as possible.

Of course, in the compressor actuation condition determining step S200, the refrigerant flow path valve 300 may allow a partial amount of cooling air to be supplied to the refrigeration chamber and an amount of cooling air to remain in the freezer chamber according to the preset temperatures of the refrigeration chamber and the freezer chamber and/or the load(s) thereon or therein.

Also, in the compressor stopping step S400, the actuation or operation of the compressor 100 is forcibly terminated after the refrigerant flow path valve opening and closing step 300.

Further, after the compressor stopping step S400, a blower fan actuating step S500 in which blower fans 410 and 510 in or adjacent to the refrigeration chamber evaporator 400 and the freezer chamber evaporator 500 may be operated or actuated for a predetermined length of time (e.g., 1-10 minutes, and in one example, five minutes).

That is, in the blower fan actuating step 500, cooling air generated while the refrigerant is drawn toward the compressor 100 is supplied to the refrigeration chamber and the freezer chamber (in one embodiment, as much as possible).

In accordance with the present invention, as described above, the compressor actuation condition determining step S200 determines whether to stop the operation of the compressor, generally when one or more predetermined conditions for stopping or turning off the compressor are met. When it is determined that the compressor 100 should be stopped in the compressor actuation condition determining step S200, a predetermined period of time from or after an initial point in time when the compressor 100 is operating and the refrigerant flow path valve opening and closing step S300 is performed (e.g., in which both the refrigeration chamber switching valve and the freezer chamber switching valve, or the refrigerant flow path valve 300, are opened and subsequently closed again), the compressor 100 is stopped. Consequently, refrigerant generally does not remain within the refrigeration chamber evaporator 400 and the freezer chamber evaporator 500, but is instead drawn toward or received in the compressor 100 during the predetermined period of time, and thereafter, the compressor 100 is stopped. Thus, internal pressure of the refrigerant pipes may be significantly reduced, further increasing cooling and/or refrigerant circulation efficiency. In addition, since cooling air may be additionally supplied to the refrigeration chamber and the freezer chamber while the refrigerant is being drawn into the compressor during continued operation of the compressor 100, re-actuating or restarting the compressor 100 after the compressor 100 has been stopped may be deferred as late as possible.

The present disclosure also includes algorithms, computer program(s), computer-readable media and/or software, implementable and/or executable in a general purpose computer or a refrigerator or freezer equipped with a conventional digital signal processor (DSP), and configured to perform one or more of the methods and/or one or more operations of the hardware disclosed herein. Thus, a further aspect of the invention relates to algorithms and/or software that implement a method for controlling a refrigerator that is capable of reducing or preventing generation of a driving force load of, on or in a compressor in advance when the compressor is re-actuated or restarted after being stopped, thus increasing cooling or refrigerant circulation efficiency and/or reducing or preventing a waste of power. For example, the computer program or computer-readable medium generally contains a set of instructions which, when executed by an appropriate processing device (e.g., a signal processing device, such as a microcontroller, microprocessor or DSP device), is configured to perform the above-described method(s), operation(s), and/or algorithm(s).

The computer-readable medium may comprise any medium that can be read by a signal processing device configured to read the medium and execute code stored thereon or therein, such as a floppy disk, CD-ROM, magnetic tape or hard disk drive. Such code may comprise object code, source code and/or binary code. The code is generally digital, and is generally configured for processing by a conventional digital data processor (e.g., a microprocessor, microcontroller, or logic circuit such as a programmable gate array, programmable logic circuit/device or application-specific integrated circuit [ASIC]).

While the invention has been shown and described with respect to the embodiments, the present invention is not limited thereto. It will be understood by those skilled in the art that various changes and modifications may be made without departing from the scope of the invention as defined in the following claims.

## Claims

1. A method for controlling an operation of a refrigerator comprising a compressor, a condenser, and a refrigerant flow path valve that supplies refrigerant from the condenser to a refrigeration chamber evaporator and a freezer chamber evaporator, the method comprising:
circulating and/or supplying the refrigerant to the refrigeration chamber evaporator and the freezer chamber evaporator;
determining whether to stop an operation of the compressor a predetermined time from or after an initial driving point in circulating and/or supplying the refrigerant;
opening the refrigerant flow path valve and subsequently closing the refrigerant flow path valve when it is determined that the compressor should be stopped; and
stopping the compressor after opening the refrigerant flow path valve.

2. The method of claim 1, wherein the refrigerant flow path valve comprises a refrigeration chamber switching valve and a freezer chamber switching valve, opening the refrigerant flow path valve comprises opening the refrigeration chamber switching valve and the freezer chamber switching valve, and closing the refrigerant flow path valve comprises closing the refrigeration chamber switching valve and the freezer chamber switching valve.

3. The method of claim 1, further comprising operating a fan between the refrigeration chamber evaporator and the freezer chamber evaporator, or adjacent to one of the refrigeration chamber evaporator and the freezer chamber evaporator, after stopping the compressor.

4. The method of claim 3, wherein the fan is adjacent to one of the refrigeration chamber evaporator and the freezer chamber evaporator, and the method further comprises operating a second fan adjacent to the other of the refrigeration chamber evaporator and the freezer chamber evaporator after stopping the compressor.

5. The method of claim 3, wherein the fan is operated for 1-10 minutes after stopping the compressor.

6. The method of claim 3, further comprising drawing or removing refrigerant remaining in the refrigeration chamber evaporator and the freezer chamber evaporator into the compressor when the refrigerant flow path valve is open.

7. The method of claim 2, further comprising drawing or removing refrigerant remaining in the refrigeration chamber evaporator and the freezer chamber evaporator when the refrigeration chamber switching valve and the freezer chamber switching valve are open.

8. The method of claim 6, further comprising operating or actuating the compressor for 70 to 120 seconds from a point of time at which the refrigerant flow path valve is opened.

9. The method of claim 7, further comprising operating or actuating the compressor for 70 to 120 seconds from a point of time at which the refrigeration chamber switching valve and the freezer chamber switching valve are opened.

10. The method of claim 1, further comprising filtering impurities in the refrigerant using a dryer between the condenser and the refrigerant flow path valve.

11. The method of claim 8, further comprising filtering impurities in the refrigerant using a dryer between the condenser and the refrigerant flow path valve.

12. A method for controlling an operation of a refrigerator comprising a compressor, a condenser, and a refrigerant flow path valve that supplies refrigerant from the condenser to a refrigeration chamber evaporator and a freezer chamber evaporator, the method comprising:
circulating and/or supplying the refrigerant to the refrigeration chamber evaporator and the freezer chamber evaporator;
reaching one or more predetermined conditions for stopping operation of the compressor;
opening the refrigerant flow path valve and subsequently closing the refrigerant flow path valve after the one or more predetermined conditions for stopping the compressor are reached;
stopping the compressor a predetermined time after the one or more predetermined conditions for stopping the compressor are reached and after the refrigerant flow path valve is opened and closed; and
re-actuating or restarting the compressor a predetermined period of time after stopping the compressor.

13. A tangible computer-readable medium containing a set of instructions embodied therein for controlling a refrigerator, the set of instructions being configured or adapted to perform the method of claim 12.

14. A refrigerator, comprising:
a compressor that compresses a refrigerant;
a condenser receiving compressed refrigerant from the compressor;
a refrigeration chamber evaporator and a freezer chamber evaporator, each in fluid communication with the condenser;
a refrigerant flow path valve that supplies refrigerant from the condenser to the refrigeration chamber evaporator and the freezer chamber evaporator; and
a controller configured to control a flow or circulation of the refrigerant through the compressor and the refrigerant flow path valve, the controller including the computer-readable medium of claim 13.

15. The refrigerator of claim 14, wherein the refrigerant flow path valve comprises a refrigeration chamber switching valve and a freezer chamber switching valve, and the computer-readable medium causes the refrigeration chamber switching valve and the freezer chamber switching valve to open, then close.
